# EUROPEAN PATENT APPLICATION

(11) **EP 4 653 102 A1**
(43) Date of publication of application: **26.11.2025**
(21) Application number: 25178271.0
(22) Date of filing: 22.05.2025
(51) Int. Cl.: B09B 3/35, C04B 18/12, C04B 18/165, C04B 18/167, C04B 20/02, B09B 101/60

(54) **PROCESS AND PLANT FOR TREATMENT OF WASTE AND PROCESSING RESIDUES**

(30) Priority: 23.05.2024 IT 202400011692
(71) Applicant: MINERALI INDUSTRIALI ENGINEERING - S.R.L., 41043 Formigine (MO) (IT)
(72) Inventor: VULCANO, Massimiliano, I-28100 NOVARA (IT)
(74) Representative: Aseglio-Gianinet, Romina

(57) **Abstract**

The present invention relates to a process for the treatment of waste and/or residues from a processing of ceramic and/or stone material comprising the steps of: a) providing waste and/or residues from a processing of ceramic and/or stone material; b) collecting, homogenizing and/or optionally humidifying the material of step a); c) simultaneously drying and grinding the waste and/or residues of step b) until the humidity content of the waste and/or residues of < 1% is reached and then classifying said waste and/or residues according their size. The present invention also relates to a plant in which said process is carried out.

## Description

### Field of the invention

The present invention relates to a process and a plant for the treatment of waste and/or processing residues of ceramic and/or stone material.

### State of the art

A process for the production of sanitaryware usually includes numerous phases, the main ones of which can be: a molding phase in which ceramic material in the fluid state is poured into a mold usually made of resin; a solidification phase of the cast ceramic material; a drying and finishing phase of the ceramic material extracted from the mold; an enameling phase of the finished ceramic material; a firing phase of the enameled ceramic material in order to obtain the desired sanitaryware.

Numerous waste materials can be generated from each of these phases: waste sludge obtained from the processing of the ceramic material, fired waste obtained from the sanitaryware finishing phase, and many others, in particular, for example, micronized fired waste obtained from the sanitaryware finishing phase and many others. Waste materials can also be obtained from the processing and cutting of ceramic tiles as well as from the cutting and sanding of marble material (preferably marble) and other cut stones. The recovery, reuse or recycling of these waste materials are currently little used practices. In fact, these waste materials are mostly disposed of as waste, causing potential economic and environmental damage.

A similar fate often befalls stone materials. The processing of stone materials for their transformation into everyday objects, such as tiles, slabs for use in construction (e.g. kitchen worktops), walls for buildings, tombstones, etc., involves the creation of a lot of waste. In fact, the production cycle often starts from a large block of stone material that, when cut, polished and shaped, leads to the formation of numerous production scraps. This waste, similar to that derived from the production of sanitary ware, is rarely recovered, reused or recycled, and is more often disposed of as waste, again causing potential economic and environmental damage.

The possibility of having a process and a plant capable of reusing the aforementioned waste efficiently and with reduced energy consumption is therefore a need felt in the market.

### Summary of the invention

The object of this invention is therefore to have a process and a plant capable of reusing the aforementioned waste efficiently and with reduced energy consumption.

This objective is achieved by a process and a plant for the treatment of waste and/or residues from the processing of ceramic and/or stone material as outlined in the attached claims, the definitions of which form an integral part of this description.

### Brief description of the figures

The invention will be better understood from the following detailed description of its preferred embodiments, made by way of example and therefore not limiting with reference to the attached figure, in which:

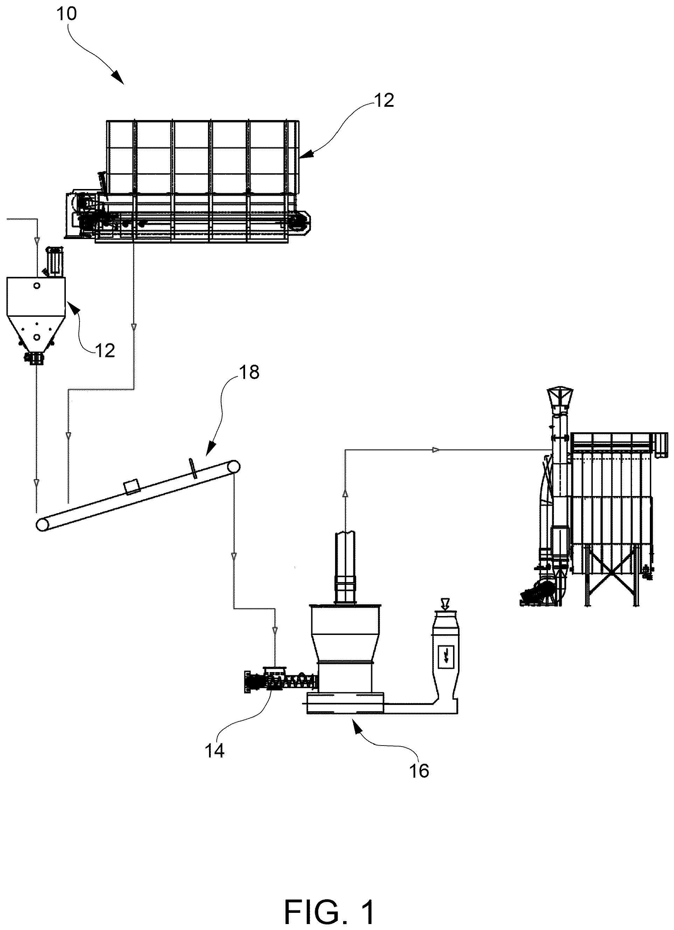

- Figure 1 shows a diagram of a preferred embodiment of the plant according to the present invention.

In the attached figure, the same or similar elements will be indicated by the same numerical references.

### Detailed description of the invention

A first object of the present invention is a process for the treatment of waste and/or residues from a processing of ceramic and/or stone materials comprising the steps of:
a) providing waste and/or residues from a processing of ceramic and/or stone material;
b) collecting, homogenizing and/or optionally humidifying the material of step a);
c) simultaneously drying and grinding the waste and/or residues of step b) until a humidity content of the waste and/or residues of < 1% is reached and then classifying said waste and/or residues according to their size. Preferably until the waste and/or residue reaches a humidity of < 0.5%.

With reference to this description and the appended claims, the term "collect" means, for example, "put together, gather, scrape together".

With reference to the present description and the appended claims, the term "ceramic material" means a solid-state inorganic compound, created with ceramic mixture and produced by firing, used for various uses; generally it means a material comprising ceramic.

With reference to the present description and the appended claims, the term "stone material" means any coherent or incoherent rocky material of a predominantly natural origin (marble, granite, travertine, sand, gravel, clay, carbonates, etc.).

With reference to the present description and the appended claims, the term "waste and/or processing residues" means a material that has been discarded from the manufacturing process, or it means machined or semi-finished pieces that are eliminated because they do not reflect the desired company quality or because the material is not suitable or because the actual dimensions do not reflect the design ones, or it means any material or substance that is not deliberately produced in a production process and that may or may not be waste (for example, post-finishing processing residues after the molding phase of a sanitary fixture).

Optionally, step c) of the process according to the present invention may be followed by a step d) which comprises: wetting the scraps and/or residues of step c). Optionally, step d) may further be followed by a step e) comprising: compacting the waste and/or residue of step d).

Advantageously, the waste and/or processing residues treated with the process according to the present invention can, once treated with the aforementioned process, be manipulated or processed again within a process or a plant for the production of raw material usable in construction. A process and a plant within which these scraps and/or residues treated according to the process of the present invention could be handled or processed is that described in the Italian patent IT102021000005882 and in the corresponding European patent document EP4305003.

According to a preferred embodiment of the process according to the present invention, the waste and/or residues from a processing of ceramic and/or stone material are preferably in the form of waste sludge, filter-pressed sludge or micronized fired waste. Preferably, these waste sludges, filter-pressed sludges and micronized fired wastes derive from the production of sanitary ware and/or from the processing (in particular from the sanding, cutting, grinding of the slabs) of stone agglomerates. Preferably, these waste sludges, filter-pressed sludges and micronized fired wastes are in the form of clods preferably having dimensions of about 400 mm x 400 mm and/or are in the form of micronized powder preferably having a particle diameter DV98 ≤ 75 µm (hereinafter the definition of DV98).

Optionally, between step a) and step b) of the process according to the present invention, there may be a further step in which the waste and/or residues from the processing of ceramic and/or stone material are separated from any metal contaminants present therein. Optionally, this separation step can be carried out by using at least one instrument suitable for identifying and separating said possible metal contaminants. Optionally, at least one instrument is chosen between a magnet and a metal detector.

Preferably, in step c) of the process according to the present invention, the classification step is followed by a step in which the waste and/or residues classified on the basis of their size (granulometry) are separated.

According to a preferred embodiment of the process according to the present invention, the waste and/or residues classified in step c) preferably have a DV98 value ≤ 63 µm. As known to the skilled person in the art, the acronym PSD (or from the English *"Particle Size Distribution"*)*,* in the scientific field and in the industrial context, represents the dimensional distribution curve of a material. The PSD is evaluated by applying mathematical and statistical models to the data that make up the dimensional distribution curves obtained. Among the most significant PSD indicators are the DV10, DV50 and DV90, followed by a number whose unit of measurement, in the case of powders, can be, for example, the micron or µm (thousandth of a millimeter). These data indicate respectively that 10%, 50% and 90% of the particles analyzed have dimensions below the microns respectively. Therefore, DV98 ≤ 63 µm indicates that 98% of the classified wastes and/or residues have dimensions below (or equal to) 63 µm.

According to a preferred embodiment of the process according to the present invention, step b) can be carried out by means of elements suitable for collecting and homogenizing such as, for example, blades, rotating screws, augers, etc.

According to a preferred embodiment of the process according to the present invention, phase c) which simultaneously involves drying, grinding and then classifying the waste and/or residues of phase b) is preferably carried out by means of a single element capable of simultaneously drying, grinding and then classifying the waste and/or residues of phase b). Preferably, said single element is a pendulum mill equipped with a burner and separator.

With reference to Figure 1, a second object of the present invention is shown, namely a plant 10 for the treatment of waste and/or residues from a processing of ceramic and/or stone materials as described above, comprising:
- at least one feeding element 12 to feed the plant 10 with waste and/or residues from a processing of ceramic and/or stone materials;
- at least one feeding-homogenising element 14 to collect, homogenise and/or optionally humidify incoming waste and/or residues from the at least one feeding element 12;
- at least one unit 16 comprising means for drying and simultaneously grinding collected, homogenized and/or optionally humidified waste and/or residues, wherein said means dry and grind to a moisture content of said waste and/or residues of < 1%, wherein the unit 16 further comprises means for classifying said dried and ground waste and/or residues according to their size. Preferably, said means dry and grind until the waste and/or residues reach a humidity of < 0.5%.

According to a preferred embodiment of the plant 10 according to the present invention, the unit 16 comprising means for drying, grinding and classifying is a pendulum mill equipped with a burner. Advantageously, in fact, the unit 16 comprising means for drying, grinding and sorting is a single machine capable of simultaneously drying, grinding and then sorting the waste and/or residues from the processing of ceramic and/or stone material.

Preferably, the plant 10 according to the present invention also comprises at least one separator element for separating the dried and ground waste and/or residues based on their size (granulometry) and preferably said separator element is a centrifugal separator preferably comprised within the unit 16 comprising means for drying, grinding and sorting.

Preferably, the unit 16 comprising means for drying, grinding and classifying is suitable for classifying waste and/or residues having a DV98 value ≤ 63 µm. Even more preferably, it is suitable for classifying wastes and/or residues with a DV98 value ≤ 45 µm.

According to a preferred embodiment of the plant 10, the feeding-homogenising element 14 preferably comprises elements suitable for collecting, homogenizing, and/or optionally humidifying waste and/or residues, such as for example blades, rotating screws, augers, etc.; even more preferably, the compactor 14 is a single shaft with reels.

According to an optional embodiment of the plant 10 according to the present invention, the plant 10, downstream of the unit 16 comprising means for drying, grinding and classifying, may optionally comprise an element comprising means for wetting the dried, ground and classified wastes and/or residues; preferably said element comprising means for wetting is a wetting machine. Optionally, the plant 10 may also comprise a compactor (or a compaction unit) for compacting the wet waste and/or residues.

Optionally, the plant 10 according to the present invention also comprises a separation element 18 suitable for identifying and separating any metallic contaminants present within the waste and/or residues from the processing of ceramic and/or stone material coming from the feeder element 12. Optionally, this separation element 18 is chosen between a magnet and a metal detector.

A preferred but non-binding embodiment of the process according to the present invention and of the plant, according to the present invention, in which the process is implemented, is described below.

In this embodiment, the plant has two feed sources: a metal belt dosing box and a feed buffer (a hopper) and uses two raw materials: clods of waste sludge derived from the production of sanitary ware and micronized powders of micronized fired waste derived from the production of sanitary ware.

400 mm x 400 mm clods of waste sludge derived from the production of sanitary ware are loaded by mechanical shovel onto a metal belt dosing box. The box has been designed so that the material does not cause clogging. The hoes present at the exit, grazing the belt, crush the material to reduce its size.

At the same time, micronized powders (75 µm) of micronized fired waste derived from the production of sanitary ware are loaded into a feed lung by pneumatic transport. A rotary valve is installed in the final part of the lung that has two functions:
- to adjust the dosage of the powder at the outlet;
- seal the lung, to avoid decompression in the system.

The materials are then conveyed (30% from the lung, 70% from the box) on a conveyor belt on which a magnet and a metal detector are mounted. These two tools are used to identify and separate any metallic contaminants (larger than 1 - 2 cm) from the raw material.

The material, entering the mill, will pass through a single-shaft feeder with reels. The feeder has the dual task of pushing the product into the pendulum mill, compacting it and regulating its flow in order to avoid air entering through the machine's feed inlet. To compact it, the feeder uses a final grid that provides resistance and allows the product to be reduced into 20 - 30 mm pieces.

The pendulum mill, equipped with an air vein burner, will simultaneously perform the drying and grinding phases of the sludge. The grinding is carried out by large pendulums which, during the rotary action due to centrifugal force, exert a strong pressure on the track housed on the sides of the mill. During this phase, the process filter fan generates a flow of air heated by the burner that dries the material by reducing its humidity to < 0.5%. The material will then be classified according to the desired grain size, through a centrifugal separator incorporated in the upper part of the mill. The separation takes place due to the suction generated by the high-pressure process bag filter. The filter is composed of a pre-chamber in which a first dust abatement takes place. The dust that settles on the sleeves is removed by a compressed air shaking system.

The product, to which the powders from the department filter are added, can then optionally be conveyed into a wetting machine through an auger and a bucket elevator. The wetted product can then optionally be conveyed into a compactor (or compaction unit) to be transformed into briquettes.

Therefore, the waste and/or processing residues thus treated can be manipulated or processed again within a process or a plant for the production of raw material usable in construction. A process and a plant within which these wastes and/or residues thus treated could be handled or processed is that described in the Italian patent IT102021000005882 and in the corresponding European patent document EP4305003.

The process and the plant according to the present invention therefore have the advantageous objective of recycling the waste materials produced during the forming phases of sanitary ware (ceramic material) and/or stone materials. Considering that the manufacturers involved accumulate large quantities of material to be disposed of with a relative management cost, through the process according to the present invention these manufacturers could reduce the disposal costs and at the same time produce new material to be resold or reinserted into their production process.

Advantageously, the process and the plant according to the present invention are in fact able to allow the reuse of the aforementioned waste efficiently and with reduced energy consumption.

## Claims

1. Process for the treatment of waste and/or residues from a processing of ceramic and/or stone materials comprising the steps of:
a) providing waste and/or residues from a processing of ceramic and/or stone material;
b) collecting, homogenizing and/or optionally humidifying the material of step a);
c) simultaneously drying and grinding the waste and/or residues of step b) until a humidity content of the waste and/or residues of < 1% is reached and then classifying said waste and/or residues according to their size.

2. Process according to claim 1, wherein the waste and/or residues from a processing of ceramic and/or stone material are in the form of waste sludge, filter-pressed sludge or micronized fired waste.

3. Process according to claim 1 or 2, wherein the waste and/or residues classified in step c) has a DV98 value ≤ 63 µm.

4. Plant for the treatment of waste and/or residues from a processing of ceramic and/or stone materials according to any one of claims 1 to 3, comprising:
- at least one feeding element (12) to feed the plant (10) with waste and/or residues from a processing of ceramic and/or stone materials;
- at least one feeding-homogenising element (14) to collect, homogenise, and/or optionally humidify incoming waste and/or residues from the at least one feeding element (12);
- at least one unit (16) comprising means for drying and simultaneously grinding collected, homogenized and/or optionally humidified waste and/or residues, wherein said means dry and grind to a moisture content of said waste and/or residues of < 1%, wherein said unit (16) further comprises means for classifying said dried and ground waste and/or residues according to their size.

5. Plant according to claim 4, wherein said at least one unit (16) comprises means for drying, grinding and classifying waste and/or residues having a DV98 value ≤ 63 µm.
